# EUROPÄISCHE PATENTSCHRIFT

(11) **EP 3 565 024 B1**
(45) Veröffentlichungstag und Bekanntmachung des Hinweises auf die Patenterteilung: **13.07.2022**
(21) Anmeldenummer: 19171274.4
(22) Anmeldetag: 26.04.2019
(51) Int. Cl.: H01M 50/24, H01M 50/249, H01M 50/229, H01M 50/231, H01M 50/227, H01M 50/213, H01M 10/613, H01M 10/6556, H01M 10/6557

(54) **BATTERIEHALTEVORRICHTUNG SOWIE FLUGZEUG MIT EINER DERARTIGEN BATTERIEHALTEVORRICHTUNG**
BATTERY HOLDER AND AIRCRAFT INCLUDING SUCH A BATTERY HOLDER
DISPOSITIF DE SUPPORT DE BATTERIE AINSI QU'AVION DOTÉ D'UN TEL DISPOSITIF DE SUPPORT DE BATTERIE

(30) Priorität: 27.04.2018 DE 102018110269
(43) Veröffentlichungstag der Anmeldung: 06.11.2019
(73) Patentinhaber: Airbus Operations GmbH, 21129 Hamburg (DE)
(72) Erfinder: Peter, Linde, 21129 Hamburg (DE)

(56) Entgegenhaltungen:
- CN-A- 106 898 711
- DE-A1-102012 213 308
- DE-A1-102015 121 107

## Beschreibung

Die Erfindung betrifft eine Batteriehaltevorrichtung sowie ein Flugzeug mit einer derartigen Haltevorrichtung.

Batteriehaltevorrichtungen sind grundsätzlich aus dem Stand der Technik bekannt. So sind beispielsweise aus dem Modellbau Kunststoffkästen bekannt, in die Batterien einsetzbar sind. In deutlich größerem Maßstab kommen derartige Kästen auch in anderen praktischen Anwendungen zum Einsatz. So sind beispielsweise schubladenähnliche Kästen bekannt, in die Batterien einsetzbar sind, um die Batterien zusammen mit den Kästen einfach zu handhaben. Außerdem dienen diese Kästen oftmals zum Schutz der Batterien.

Um einen besonders sicheren Schutz für Batterien zu gewährleisten, sind außerdem rechteck-rohrförmige Gehäuse aus Kunststoff bekannt, in die Batterien, befestigt auf Befestigungsplatten, in das Gehäuse eingeschoben werden können. Um ein derartiges Gehäuse zusammen mit den Batterien besonders sicher handhaben zu können, weist das Gehäuse eine besonderes hohe Formstabilität und/oder Steifigkeit auf. Zwar bieten derartige Gehäuse einen besonders guten Schutz für Batterien, jedoch ist der Zugang zu der Batterie in dem Batteriegehäuse nur schwer möglich. Denn um beispielsweise eine der Batterien auswechseln zu können, muss zunächst die Befestigungsplatte aus dem Gehäuse herausgezogen werden, um sodann Zugriff auf die jeweilige Batterie zu erhalten.

Derartige Batteriehaltevorrichtungen sind jedoch für Flugzeuge nur wenig geeignet. Denn die Befestigungsplatten sowie das Gehäuse verursachen ein Gewicht, dass von dem Flugzeug mit zu transportieren ist, was wiederum Zusatzleistung zum Antrieb des Flugzeugs verursacht. Dies ist jedoch zu vermeiden.

Die CN106898711 offenbart eine Batterieunterschale mit einem Verstärkungsgerüst. Das Verstärkungsgerüst ist aus einem Verbundmaterial gebildet, welches zwei Faserverbundmaterialschichten mit einer dazwischen eingebetteten Kernschicht umfasst. Das Faserverbundmaterial ist beispielsweise aus Kohle-, Glas-, Aramid- oder Basaltfaser in einer Harzmatrix gebildet und die Kernschicht ist beispielsweise aus einem Schaum gebildet, so z.B. Polyurethan. Die Batterieunterschale umfasst mehrere Bereiche für die Aufnahme von Batterien. Diese Bereiche sind durch das merhschichtige Verbundmaterial voneinander getrennt.

Die DE102015121107A1 offenbart eine Energiespeichervorrichtung aus einem Isolationsmaterial, welches beispielsweise als Schaum ausgebildet ist. In dem Isolationsmaterial sind Öffnungen vorgesehen, in die Energiespeicherzellen einsetzbar sind. Das Isolationsmaterial hat dabei tragende als auch thermisch isolierende Eigenschaften, um die Energiespeicherzellen insbesondere in einem Fehlerfall thermisch voneinander zu trennen.

Die DE102012213308A1 offenbart eine Batteriepackgehäuseanordnung für ein Elektro- oder ein Hybridfahrzeug, die zumindest teilweise aus einem Kunststoffverbundwerkstoff gebildet ist.

Der Erfindung liegt deshalb die Aufgabe zu Grunde, eine leichte und robuste Batteriehaltevorrichtung mit einem Träger für Batterien bereitzustellen, der ein einfaches Auswechseln von Batterien erlaubt, so dass die Batteriehaltevorrichtung für den Einsatz in einem Flugzeug geeignet ist.

Gelöst wird die Aufgabe gemäß einem ersten Aspekt der Erfindung durch eine Batteriehaltevorrichtung mit den Merkmalen des Anspruchs 1. Vorgesehen ist also eine Batteriehaltevorrichtung für ein Flugzeug, wobei die Batteriehaltevorrichtung einen Träger aufweist, der aus festem Schaum und mit dem Schaum verbundenen, endlosfaserverstärktem Kunststoff gebildet ist. Außerdem weist die Batteriehaltevorrichtung eine Mehrzahl von Hohlräumen auf, in die Batterien einsetzbar sind. Außerdem weist die Batteriehaltevorrichtung mindestens einen Kühlkanal zur Kühlung von in den Hohlräumen einsetzbaren Batterien auf. Die Hohlräume sind nur von dem festen Schaum des Trägers gebildet.

Bei dem Schaum handelt es sich vorzugsweise um offenporigen oder geschlossenporigen Schaum. Der Schaum ist fester Schaum. Der Schaum kann auch als Schaumstoff bezeichnet werden. Es handelt sich also nicht um flüssigen Schaum. So kann es sich bei dem Schaum beispielsweise um einen Polyurethan-Schaum handeln. Alternativ oder ergänzend kann es vorgesehen sein, dass der Schaum als ein auf Polymer basierender Schaum ausgebildet ist.

Außerdem hat es sich als vorteilhaft heraus gestellt, wenn der Schaum als nicht brennbarer und/oder als nicht entflammbarer Schaum ausgebildet ist. Der Schaum kann also Stoff aufweisen, der ein Entzünden des Schaums verhindert. Der Schaum kann eine beliebige äußere Form aufweisen. So kann der Schaum beispielsweise eine rechteckige Außenform aufweisen.

Außerdem ist es bevorzugt vorgesehen, dass der Träger aus dem Schaum und dem faserverstärkenden Kunststoff mit Endlosfasern gebildet ist. Dieser endlosfaserverstärkte Kunststoff kann von festem Matrixmaterial gebildet sein, in das Endlosfasern eingebettet sind. Bei den Fasern handelt es sich beispielsweise um Glasfasern, Kohlenstofffasern und/oder Aramidfasern. Die Fasern sind als Endlosfasern ausgebildet. So kann die Länge einer jeden Faser beispielsweise mindestens der Länge der kürzesten oder der längsten Außenseite des Trägers entsprechen. Besonders bevorzugt weist jede Endlosfaser eine Länge auf, die ein Vielfaches einer mittleren Außenlänge des Trägers entspricht. Der endlosfaserverstärkte Kunststoff wird auch vereinfacht als fester verstärkter Kunststoff im Folgenden bezeichnet. Der faserverstärkte Kunststoff kann strangförmig in den Schaum integriert sein. Dadurch kann ein Gerüst und/oder eine Struktur nach Art eines Fachwerks von mehreren strangförmigen Abschnitten des faserverstärkten Kunststoffs gebildet sein. Weiterhin ist es möglich, dass zumindest eine Außenseite, und hier vorzugsweise abschnittsweise, von dem faserverstärkte Kunststoff gebildet ist. Es ist jedoch bevorzugt vorgesehen, dass zumindest zwei gegenüberliegende Außenseiten, vorzugsweise zwei Paare von gegenüberliegenden Außenseiten, frei von dem faserverstärkten Kunststoff sind oder zumindest nicht vollständig von dem faserverstärkten Kunststoff bedeckt sind. Vielmehr ist es bevorzugt vorgesehen, dass nur zwei gegenüberliegende Außenseiten des Trägers von dem faserverstärkten Kunststoff zumindest abschnittsweise bedeckt sind. Bei dem faserverstärkten Kunststoff handelt es sich um ausgehärteten faserverstärkten Kunststoff. Das Matrixmaterial kann dabei beispielsweise ein duroplastisches Matrixmaterial oder ein thermoplastisches Matrixmaterial sein.

Außerdem werden von dem festen Schaum des Trägers die Hohlräume gebildet, in die Batterien einsetzbar sind. Somit ist es erfindungsgemäß vorgesehen, dass die Hohlräume nur von dem festen Schaum des Trägers gebildet sind. Der Querschnitt eines jeden Hohlraums kann derartig gewählt sein, dass dieser einer Außenform der einzusetzenden Batterie entspricht. Bevorzugt ist es vorgesehen, dass der von dem Träger aufgespannte Raum zwischen den Hohlräumen von dem festen Schaum gefüllt ist. Dadurch wird effektiv verhindert, dass es in dem Träger Freiräume gibt, die weder zum Einsetzen der Batterien dienen noch von dem festen Schaum oder dem faserverstärkten Kunststoff gefüllt sind. Dies wiederum gewährleistet eine besonders hohe Formstabilität der Batteriehaltevorrichtung.

Bevorzugt ist es vorgesehen, dass der Träger eine Formstabilität und/oder Festigkeit und/oder Steifigkeit aufweist, die derart vorbestimmt ist, dass der Träger die in die Hohlräume einsetzbaren Batterien selbstständig tragen kann. Dadurch wird eine besonders vorteilhafte Handhabbarkeit der Batteriehaltevorrichtung gewährleistet. Zugleich ist der von dem festen Schaum und dem faserverstärkten Kunststoff gebildete Träger besonders leicht. Mit anderen Worten kann eine derartige Batteriehaltevorrichtung ein besonders geringes Gewicht und zugleich eine besonders hohe Formstabilität gewährleisten.

Darüber hinaus weist die Batteriehaltevorrichtung mindestens einen Kühlkanal zur Kühlung von in den Hohlräumen einsetzbaren Batterien auf. Der Kühlkanal kann zum Leiten von Kühlfluid, insbesondere Kühlflüssigkeit und/oder einem Kühlgas, wie Luft, ausgebildet sein. Durch den Kühlkanal kann also Kühlfluid strömen, das zur Aufnahme von Wärme geeignet ist, die von den einsetzbaren Batterien abgegeben wird. Der Kühlkanal kann dazu unmittelbar angrenzen an den Hohlräumen vorbeiführen, in die die Batterien einsetzbar sind. Weiterhin ist es möglich, dass der Kühlkanal durch Wärmeleitelemente mit zumindest einem Abschnitt der Mantelwandung der Hohlräume gekoppelt ist, so dass Wärme von einer Batterie über das Wärmeleitelement an den Kühlkanal übertragbar ist. Hier wiederum kann die Wärme an das durch den Kühlkanal führbare Kühlfluid übertragen werden.

Die Batteriehaltevorrichtung verbindet deshalb nicht nur die Vorteile, dass diese besonders leicht und formstabil ist, sondern die Batteriehaltevorrichtung bietet darüber hinaus eine besonders vorteilhafte Kühlung von Batterien, was die Sicherheit des Einsatzes einer derartigen Batteriehaltevorrichtung deutlich verbessert. Eine derartige Batteriehaltevorrichtung eignet sich besonders vorteilhaft zu einem Einsatz in einem Flugzeug. Denn bei dem Flugzeug wird nicht nur auf eine Gewichtsreduktion geachtet, sondern auch die Sicherheit des Flugzeugs bedarf der besonderen Aufmerksamkeit.

Eine vorteilhafte Ausgestaltung der Batteriehaltevorrichtung zeichnet sich dadurch aus, dass der endlosfaserverstärkte Kunststoff des Trägers gedruckt ist. Der endlosfaserverstärkte Kunststoff kann dabei in Bahnen oder als Strebe derart gedruckt sein, dass diese Bahnen bzw. Streben in den festen Schaum eingebettet sind. Der endlosfaserverstärkte Kunststoff des Trägers kann derart gedruckt sein, dass der endlosfaserverstärkte Kunststoff zur Verstärkung und/oder Erhöhung der Steifigkeit des festen Schaums dient und/oder ausgebildet ist.

Eine weitere vorteilhafte Ausgestaltung der Batteriehaltevorrichtung zeichnet sich dadurch aus, dass zumindest ein Teil des endlosfaserverstärkten Kunststoffes des Trägers an mindestens einer Außenseite des Trägers angeordnet ist. So kann der endlosfaserverstärkte Kunststoff beispielsweise an zwei gegenüberliegenden Außenseiten des Trägers angeordnet sein. Die übrigen Außenseiten des Trägers können frei von dem endlosfaserverstärkten Kunststoff sein. Dies ist jedoch nicht zwingend notwendig. Der endlosfaserverstärkte Kunststoff kann derart an der mindestens einen Außenseite des Trägers angeordnet werden, sodass der endlosfaserverstärkte Kunststoff auf dem festen Schaum anliegt.

Eine weitere vorteilhafte Ausgestaltung der Batteriehaltevorrichtung zeichnet sich dadurch aus, dass der Schaum als druckbarer Schaum ausgebildet ist. Durch den druckbaren Schaum kann die Außenform des Teils vom Träger, der von dem festen Schaum gebildet ist, besonders individuell angepasst werden. So kann es für die Praxis vorgesehen sein, dass die Batteriehaltevorrichtung für den jeweiligen Anwendungszweck individuell angepasst wird. Entsprechendes kann deshalb auch für den gedruckten, festen Schaum gelten. Dieser kann zunächst in der gewünschten Ausgestaltung gedruckt werden. Daraufhin kann der endlosfaserverstärkte Kunststoff an zu mindestens eine Außenseite des Schaums gedruckt werden, sodass aus dem festen Schaum und dem mit dem Schaum verbundenen, endlosfaserverstärkte Kunststoff der Träger gebildet ist. Das Matrixmaterial des endlosfaserverstärkte Kunststoffes und der feste Schaum können auf dem gleichen Matrixmaterial basieren. So können beide beispielsweise auf einem Polyurethan oder einem Polymer basieren. Bei der Verbindung zwischen den faserverstärkten Kunststoff und dem festen Schaum handelt es sich vorzugsweise um eine stoffschlüssige Verbindung.

Eine weitere vorteilhafte Ausgestaltung der Batteriehaltevorrichtung zeichnet sich dadurch aus, dass der Schaum elektrisch isolierend ausgebildet ist. Die Hohlräume zum Einsetzen der Batterien werden von dem Träger, und zwar nur von dem festen Schaum des Trägers gebildet. Ist der Schaum elektrisch isolierend ausgebildet, so bietet dies auch eine gute elektrische Isolierung zwischen den Batterien in einem Hohlraum und den Batterien in einem weiteren, insbesondere benachbarten Hohlraum. Es kann vorgesehen sein, dass der endlosfaserverstärkte Kunststoff des Trägers von einer Mantelwandung der Hohlräume beabstandet ist. Dies ist insbesondere dann von Vorteil, wenn der endlosfaserverstärkte Kunststoff des Trägers Endlosfasern aus Kohlenstoff aufweist.

Eine weitere vorteilhafte Ausgestaltung der Batteriehaltevorrichtung zeichnet sich dadurch aus, dass die Hohlräume innerhalb des Trägers angeordnet sind, wobei zu jedem Hohlraum ein Zugang an der Außenseite oder an gegenüberliegenden Außenseiten des Trägers ausgebildet ist, sodass in jeden Hohlraum eine Batterie durch den zugehörigen Zugang einsetzbar ist. Vorzugsweise sind die Hohlräume innerhalb des festen Schaums des Trägers angeordnet. Bei einem Zugang zu einem Hohlraum kann es sich um eine außenseitige Öffnung handeln, die einen Zugang zu dem Hohlraum bildet. Durch diesen Zugang kann deshalb eine Batterie in einen Hohlraum von außen eingesetzt werden. Vorzugsweise sind die Zugänge an einer Außenseite angeordnet, die frei von faserverstärkten Kunststoff ist. Sofern die Zugänge jedoch an einer Außenseite des Trägers angeordnet sind, an der ebenfalls endlosfaserverstärkter Kunststoff angeordnet ist, so ist es bevorzugt vorgesehen, dass Aussparungen zumindest im Bereich der Zugänge in dem faserverstärkten Kunststoff vorgesehen sind.

Eine weitere vorteilhafte Ausgestaltung der Batteriehaltevorrichtung zeichnet sich dadurch aus, dass jeder Hohlraum zur Aufnahme von mehreren Batterien ausgebildet ist. So kann jeder Hohlraum beispielsweise dazu ausgebildet sein, mehrere in Reihe hintereinander angeordnete Batterien aufzunehmen. Dies gilt insbesondere dann, wenn die Batterien als stabförmige Batterien ausgebildet sind. Der Querschnitt des Hohlraums kann zu dem Querschnitt der aufzunehmenden Batterien korrespondieren. Sollen beispielsweise kreiszylindrische, stabförmige Batterien aufgenommen werden, so ist es bevorzugt vorgesehen, dass der Hohlraum als ein kreiszylindrischer Hohlraum ausgebildet ist.

Die Mehrzahl von Hohlräumen können parallel zueinander ausgerichtet sein. Dies gilt insbesondere dann, wenn jeder Hohlraum als ein kreiszylindrischer Hohlraum ausgebildet ist. Sodann können die Zugänge an den Stirnseiten der Hohlräume an der gleichen Außenseite des Trägers oder an gegenüberliegenden Außenseiten des Trägers angeordnet sein.

Eine weitere vorteilhafte Ausgestaltung der Batteriehaltevorrichtung zeichnet sich durch elektrische Verbindungsleitungen aus, die angeordnet sind, um die einsetzbaren Batterien in einer vorbestimmten Struktur elektrisch zu verbinden. Dabei sind die Verbindungsleitungen innerhalb des Trägers angeordnet und/oder in den Träger zumindest teilweise integriert. Die elektrischen Verbindungsleitungen können lösbar oder fest mit dem Träger gekoppelt und/oder verbunden sein. So können die Verbindungsleitungen beispielsweise von einer Folie mit gedruckten Verbindungsleitungen gebildet sein. Die Folie kann an einer Außenseite des Trägers derart angeordnet werden, sodass Batteriepole mit den Verbindungsleitungen in Kontakt kommen, wenn die Batterien in die Hohlräume eingesetzt werden. Durch die Verbindungsleitungen können die Batterien in einer vorbestimmten Weise elektrisch miteinander gekoppelt werden. So kann beispielsweise eine Parallelschaltung der Batterien vorgesehen sein. Alternativ kann auch eine andere Schaltungsweise der Batterien vorgesehen sein. So können die Batterien beispielsweise in Serie miteinander verschaltet sein. Es können auch mehrere Folien vorgesehen sein, auf denen elektrische Verbindungsleitungen aufgedruckt sind. Diese Folien können an gegenüberliegenden Außenseiten derart an dem Träger angeordnet sein, dass jeweils gruppenweise gleiche Polarten der Batterien miteinander gekoppelt werden. Mindestens eine der Folien können lösbar an einer Außenseite des Trägers angeordnet sein. Es ist jedoch auch möglich, dass zumindest eine der Folien fest an einer Außenseite des Trägers angeordnet ist.

Die elektrischen Verbindungsleitungen sind innerhalb des Trägers angeordnet und/oder in den Träger zumindest teilweise integriert. Diese Verbindungsleitungen können ebenfalls derart angeordnet sein, um die in die Hohlräume einsetzbaren Batterien in der vorbestimmten Struktur elektrisch zu verbinden. Die Verwendung von Verbindungsleitungen, die innerhalb des Trägers angeordnet und/oder in den Träger zumindest teilweise integriert sind, bietet den Vorteil, dass die Batteriehandhabungsvorrichtung besonders einfach und sicher handhabbar ist. Denn eine falsche Verschaltung der Batterien kann auf diese Weise besonders effektiv verhindert werden.

Eine weitere vorteilhafte Ausgestaltung der Batteriehaltevorrichtung zeichnet sich dadurch aus, dass der Träger durch Wände in mehrere Sektionen unterteilt ist, wobei jede Wand aus endlosfaserverstärktem Kunststoff gebildet ist, und wobei die Wände und der endlosfaserverstärkte Kunststoff des Trägers integral ausgebildet sind. Die Wände können den Träger zugeordnet sein. In diesem Fall können die Wände von dem endlosfaserverstärktem Kunststoff des Trägers gebildet sein. Der endlosfaserverstärkte Kunststoff der Wände kann dabei mit dem übrigen endlosfaserverstärktem Kunststoff des Trägers integral ausgebildet sein. Dadurch wird eine besonders hohe Formstabilität des Trägers gewährleistet. Zwischen den Wänden des Trägers kann der feste Schaum angeordnet sein. Von dem Schaum des Trägers sind die Hohlräume zum Einsetzen der Batterien gebildet.

In jeder Sektion kann eine Vielzahl von Hohlräumen vorgesehen sein. Da es mehrere Sektionen geben kann, kann auch eine entsprechende Vielzahl von Hohlräumen vorgesehen sein.

Eine vorteilhafte Ausgestaltung der Batteriehaltevorrichtung zeichnet sich dadurch aus, dass an jeder Wand mindestens ein Abschnitt des Kühlkanals oder eine der Kühlkanäle ausgebildet ist. Jede Wand kann also als Trägerbasis zum Befestigen eines Kühlkanals dienen. Alternativ oder ergänzend kann es vorgesehen sein, dass jede Wand zumindest einen Teil des jeweiligen Kühlkanals bildet. So können die Kühlkanäle zumindest teilweise integral von den Wänden ausgebildet sein. Die Wände bieten darüber hinaus eine Basis, um eine vorbestimmte Anordnung der Kühlkanäle zu gewährleisten. Deshalb ist es möglich, dass sich die Kühlkanäle durch den Innenraum des Trägers erstrecken, was eine besonders effektive Kühlung der Hohlräume bzw. der darin einsetzbaren Batterien sicherstellen kann.

Eine vorteilhafte Ausgestaltung der Batteriehaltevorrichtung zeichnet sich dadurch aus, dass die Wände und der Träger in einem ununterbrochenen Verfahren gedruckt ausgebildet sind. Sowohl der feste Schaum als auch der endlosfaserverstärkte Kunststoff des Trägers wie auch die Wände können gedruckt ausgebildet sein. Dies kann in einem ununterbrochenen Verfahren ausgeführt werden. Dadurch ist es möglich, dass auch innerhalb des Schaums Streben und/oder stangenförmige Bahnen aus faserverstärktem Kunststoff integriert werden, was die Formstabilität des Trägers besonders vorteilhaft verbessert. Auch die Wände, die innerhalb des Trägers angeordnet sind, können dabei in einer integralen Verfahrensart hergestellt werden. Eine besonders vorteilhafte Ausgestaltung der Batteriehaltevorrichtung zeichnet sich dadurch aus, dass die Wände parallel zueinander innerhalb des Trägers angeordnet sind. Eine Vielzahl von parallel zueinander angeordneten Sektionen kann dadurch entstehen. Die Sektionen können zumindest im Wesentlichen gleich ausgestaltet sein. Dadurch lässt sich eine besonders hohe Dichte an Hohlräumen bzw. Batterien innerhalb des Trägers gewährleisten.

Gemäß einem zweiten Aspekt der Erfindung wird die eingangs genannte Aufgabe gelöst durch ein Flugzeug mit den Merkmalen des Anspruchs 13. Vorgesehen ist also ein Flugzeug, das ein Strukturbauteil sowie eine Batteriehaltevorrichtung aufweist, wie sie gemäß dem ersten Aspekt der Erfindung und/oder einer der zugehörigen, vorteilhaften Ausgestaltungen erläutert worden ist. In diesem Zusammenhang wird auf die vorteilhaften Erläuterungen, bevorzugten Merkmale, Effekte und/oder Vorteile, wie sie im Zusammenhang mit der Batteriehaltevorrichtung bereits erläutert worden sind, zumindest in analoger Weise Bezug genommen. Bei dem Flugzeug ist es außerdem vorgesehen, dass mindestens eine Batterie in jeden Hohlraum des Trägers der Batteriehaltevorrichtung eingesetzt ist. Außerdem ist die Batteriehaltevorrichtung lösbar in einem von dem Strukturbauteil geschützten und/oder aufgespannten Arbeitsraum angeordnet und/oder befestigt.

Bei dem Strukturbauteil des Flugzeugs handelt es sich vorzugsweise um ein Bauteil der tragenden Struktur des Flugzeugs. Das Strukturbauteil kann also eine Trägerfunktion des Flugzeugs bilden. Ein Strukturbauteil des Flugzeugs kann beispielsweise ein Spant des Flugzeugs oder ein Querträger im Fußboden des Flugzeugs sein. Das Strukturbauteil kann dabei einen Arbeitsrahmen aufspannen und/oder schützen. Das Strukturbauteil kann beispielsweise im Querschnitt U-förmig oder rechteckförmig ausgebildet sein. In einer Längsrichtung des Strukturbauteils, die sich vorzugsweise senkrecht zum zuvor genannten Querschnitt des Strukturbauteils erstreckt, kann der Arbeitsraum ausgebildet sein. Ist das Strukturbauteil beispielsweise von einem U-förmigen Trägerbauteil gebildet, so kann das Trägerbauteil einen aufgespannten bzw. geschützten Arbeitsraum ausbilden. In diesen Arbeitsraum kann die Batteriehaltevorrichtung eingesetzt werden. Sie kann also in dem Arbeitsraum angeordnet werden. Außerdem kann die Batteriehaltevorrichtung lösbar an dem Strukturbauteil befestigt werden. Dabei hat sich als besonders vorteilhaft herausgestellt, wenn die Batteriehaltevorrichtung formschlüssig in den Arbeitsraum des Strukturbauteils eingesetzt und/oder formschlüssig mit dem Strukturbauteil verbunden ist. Außerdem kann eine lösbare, kraftschlüssige Verbindung zwischen der Batteriehaltevorrichtung und dem Strukturbauteil vorgesehen sein.

In die Hohlräume des Trägers der Batteriehaltevorrichtung sind Batterien eingesetzt. Diese Batterien können durch elektrische Verbindungsleitungen in einer vorbestimmten Schaltungsweise miteinander gekoppelt sein. Außerdem ist es bevorzugt vorgesehen, dass die Batteriehaltevorrichtung derart ausgebildet ist, dass die elektrischen Verbindungsleitungen und/oder die Pole der Batterien geschützt und/oder isoliert zu den Außenseiten des Trägers ausgestaltet sind. Dadurch kann effektiv verhindert werden, dass eine ungewünschte elektrische Verbindung zwischen den Batterien und dem Strukturbauteil hergestellt ist. Bei den Batterien kann es sich um Akkubatterien handeln. So können die Batterien beispielsweise von Lithium-Ion-Akkubatterien gebildet sein. Andere Batterien, insbesondere andere Akkubatterien, sind ebenfalls möglich.

Wie bereits im Zusammenhang mit den Erläuterungen zu der Batteriehaltevorrichtung gemäß dem ersten Aspekt dargestellt wurde, ist es bevorzugt vorgesehen, dass die Batteriehaltevorrichtung, auch dann, wenn die Batterien in die Hohlräume des Trägers eingesetzt sind, eine besonders hohe Formstabilität aufweisen kann. Dies bietet den Vorteil, dass die in den Arbeitsraum des Strukturbauteils eingesetzte Batteriehaltevorrichtung zumindest im Wesentlichen keine Verstärkung des Strukturbauteils hervorruft. Vielmehr kann es in einem idealen Fall vorgesehen sein, dass keine Veränderung des Strukturbauteils notwendig ist, um die Batteriehaltevorrichtung zu tragen und/oder zu halten. Dadurch kann der konstruktive Aufwand bei einem bestehenden Flugzeug besonders klein gehalten werden, wenn Batteriehaltevorrichtungen in von Strukturbauteilen geschützten und/oder aufgespannten Arbeitsräumen eingesetzt werden sollen.

Eine vorteilhafte Ausgestaltung des Flugzeugs zeichnet sich dadurch aus, dass das Strukturbauteil hohlzylindrisch ausgebildet ist. Zumindest an einer Stirnseite kann das Strukturbauteil eine Öffnung aufweisen. Durch diese Öffnung kann die Batteriehaltevorrichtung in den entsprechenden Arbeitsraum eingesetzt werden, um die Batteriehaltevorrichtung in dem Arbeitsraum anzuordnen und/oder an dem Strukturbauteil lösbar zu befestigen.

Eine vorteilhafte Ausgestaltung des Flugzeugs zeichnet sich dadurch aus, dass der Träger der Batteriehaltevorrichtung eine mantelseitige Außenform aufweist, die zu einer Innenform des hohlzylindrischen Strukturbauteils des Flugzeugs korrespondiert. Denn in diesem Fall kann eine formschlüssige Verbindung zwischen der Batteriehaltevorrichtung und dem Strukturbauteil gewährleistet werden.

Eine vorteilhafte Ausgestaltung des Flugzeugs zeichnet sich dadurch aus, dass die Außenform des Trägers der Batteriehaltevorrichtung zu einem Abschnitt der geometrischen Form des Arbeitsraums des Strukturbauteils korrespondiert. Denn auch wenn das Strukturbauteil nicht hohlzylindrisch, sondern beispielsweise nach Art eines U-förmigen Trägerbauteils ausgebildet ist, ist es von Vorteil, wenn die Form des Trägers der Batteriehaltevorrichtung zumindest zu einem Abschnitt des Arbeitsraums korrespondiert. Denn dies gewährleistet eine formschlüssige Anordnung der Batteriehaltevorrichtung in dem Arbeitsraum des Strukturbauteils.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figur 1: zeigt eine erste vorteilhafte Ausgestaltung der Batteriehaltevorrichtung in einer schematischen Perspektivansicht.
- Figur 2: zeigt eine vorteilhafte Ausgestaltung des Flugzeugs in einer schematischen Perspektivansicht.
- Figur 3: zeigt eine Zusammenschau einer vorteilhaften Ausgestaltung der Batteriehaltevorrichtung und eines Strukturbauteils eines Flugzeugs in einer schematischen Perspektivansicht.
- Figur 4: zeigt eine weitere vorteilhafte Ausgestaltung einer Zusammenschau einer Batteriehaltevorrichtung und eines Strukturbauteils in einer schematischen Perspektivansicht.

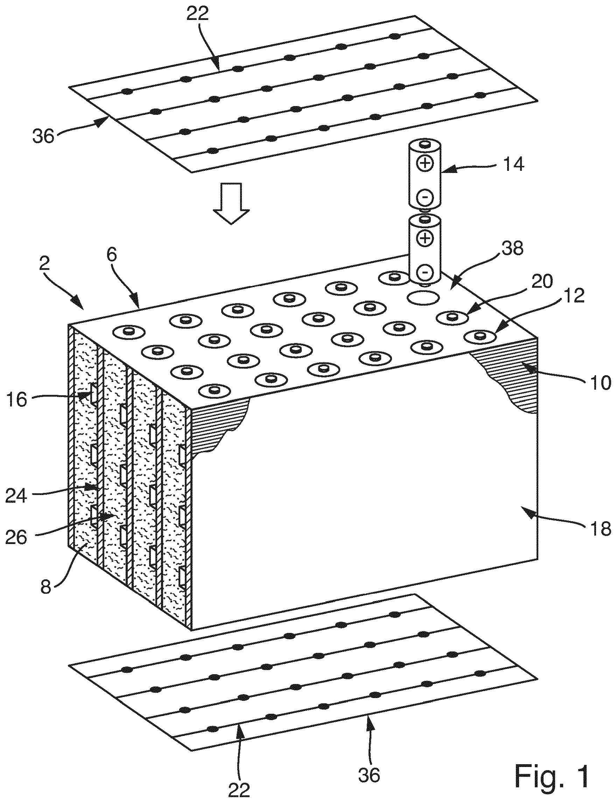

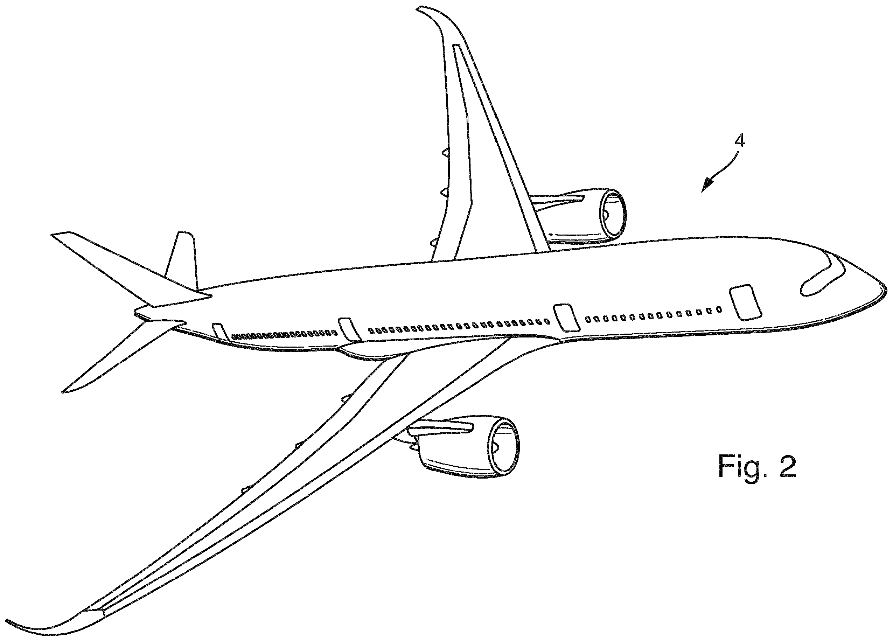

In der Figur 1 ist eine vorteilhafte Ausgestaltung der Batteriehaltevorrichtung 2 für ein Flugzeug 4 in einer schematischen Perspektivansicht wiedergegeben. Ein Beispiel eines Flugzeugs 4 ist in der Figur 2 schematisch dargestellt.

Die Batteriehaltevorrichtung 2 ist zum Einsatz in einem Flugzeug 4 besonders gut geeignet, da die Batteriehaltevorrichtung 2 ein geringes Gewicht 2 aufweist, eine hohe Formstabilität bereitstellt und außerdem den Zugang zu den Hohlräumen 12 für Batterien 14 besonders einfach erlaubt.

Um die zuvor genannten Vorteile zu erreichen, weist die Batteriehaltevorrichtung 2 einen Träger 6 auf, der aus festem Schaum 8 und mit dem Schaum 8 verbundenen, endlosfaserverstärkten Kunststoff 10 gebildet ist. Der Schaum 8 und der endlosfaserverstärkte Kunststoff 10 können den Träger 6 also integral ausbilden. Der endlosfaserverstärkte Kunststoff 10 und der Schaum 8 sind vorzugsweise stoffschlüssig miteinander verbunden. Bei dem endlosfaserverstärkte Kunststoff 10 kann es sich beispielsweise um ein duroplastisches oder thermoplastisches Matrixmaterial handeln, in das Endlosfasern, vorzugsweise aus Kohlenstoff, eingebettet sind. Für die in das Matrixmaterial eingebetteten Fasern können jedoch auch andere Fasern, beispielsweise Glasfasern oder Aramidfasern, vorgesehen sein.

Von dem Träger 6 sind eine Mehrzahl von Hohlräumen 12 gebildet. Dabei ist es bevorzugt vorgesehen, dass die Hohlräume 12 nur von dem festen Schaum 8 des Trägers 6 gebildet sind. Es ist deshalb bevorzugt vorgesehen, dass der endlosfaserverstärkte Kunststoff 10 des Trägers 6 keinen unmittelbaren Kontakt zu einem der Hohlräume 12 aufweist. Vielmehr dient der endlosfaserverstärkte Kunststoff 10 des Trägers 6 zur Erhöhung der Festigkeit des Trägers 6 bzw. des Schaums 8. Von dem endlosfaserverstärkte Kunststoff 10 des Trägers 6 kann dabei ein Gerüst und/oder ein Muster aus Streben und/oder plattenförmigen Elementen gebildet sein. Dies kann eine besonders hohe Steifigkeit und/oder Formstabilität gewährleisten, die sich in entsprechender Weise auf den Träger 6 überträgt. Die vorzugsweise von dem Schaum 8 gebildeten Hohlräume 12 können derart ausgestaltet sein, dass Batterien 14 formschlüssig in die Hohlräume 12 einsetzbar sind. Diese gewährleistet, dass die Batterien 14 in den Hohlräumen 12 besonders sicher gehalten werden können. Denn einerseits kann durch den Schaum 8 eine gewünschte Positionierung der Batterien 14 gewährleistet werden. Darüber hinaus bietet der Schaum 8 eine Dämpfungsfunktion für die Batterien 14, wenn die Batteriehaltevorrichtung 2 Erschütterungen und/oder anderen mechanischen Stößen ausgesetzt ist.

Wie es aus der Figur 1 schematisch zu erkennen ist, können in einem bzw. jedem Hohlraum 12 auch mehrere Batterien 14 eingesetzt werden. Hierbei hat es sich als vorteilhaft herausgestellt, wenn jeder Hohlraum 12 derart ausgestaltet ist, dass mehrere Batterien 14 in Reihe hintereinander formschlüssig in den jeweiligen Hohlraum 12 einsetzbar sind. In diesem Fall kann die Länge des Hohlraums 12 zu einer vielfachen Länge einer Batterie 14 ausgebildet sein.

Bezüglich der Batterien 14 ist es nicht zwingend notwendig, dass die Batterien 14 eine stabförmige bzw. zylindrische Form aufweisen. Auch anders geformte Batterien 14 können verwendet werden. In diesem Fall kann der Hohlraum 12 an die äußere Form der mindestens einen Batterie 14 angepasst sein, insbesondere derart, dass eine formschlüssige Aufnahme mindestens einer Batterie 14 an dem jeweiligen Hohlraum 12 gewährleistet ist.

Die Batteriehaltevorrichtung 2 weist außerdem mindestens einen Kühlkanal 16 auf. Der mindestens eine Kühlkanal 16 dient zur Kühlung von in den Hohlräumen 12 einsetzbaren Batterien 14. Hierbei hat es sich als vorteilhaft herausgestellt, wenn der mindestens eine Kühlkanal 16 innerhalb des Trägers 6 eingebettet ist, sodass der Kühlkanal 16 besonders dicht an den Hohlräumen 12 vorbeigeführt werden kann. Dabei kann der Kühlkanal 16 zumindest einen Abschnitt einer innenseitigen Wandung zur Begrenzung eines Hohlraums 12 ausgebilden.

Wie es in der Figur 1 beispielhaft gezeigt ist, ist es bevorzugt vorgesehen, dass die Hohlräume 12 parallel zueinander angeordnet sind. In diesem Fall kann ein Kühlkanal 16 an mehreren Hohlräumen 12 vorbeigeführt werden. Außerdem kann eine Wandung zur Bildung des Kühlkanals gleichzeitig jeweils einen Abschnitt einer Innenwand zur Begrenzung der zuvor genannten Hohlräume 12 bilden, was eine besonders effektive Übertragung von Wärme gewährleistet, die von Batterien in den Hohlräumen 12 abgegeben und an ein in dem Kühlkanal 16 strömendes Kühlfluid übertragbar ist. Denn der Kühlkanal 16 kann an ein Kühlleitungssystem angeschlossen werden und/oder dazu ausgebildet sein. Als Kühlmittel kann ein flüssiges Kühlmittel oder ein gasförmiges Kühlmittel verwendet werden. Bei einem Einsatz der Batteriehaltevorrichtung 2 kann der Kühlkanal 16 also an ein Kühlsystem des Flugzeugs 4 lösbar angekoppelt sein. Hierbei hat es sich als vorteilhaft herausgestellt, wenn als Kühlmittel Luft verwendet wird.

Darüber hinaus ist es von Vorteil, wenn die Batteriehaltevorrichtung 2 eine Vielzahl von Kühlkanälen 16 aufweist. Die Kühlkanäle 16 können sich zwischen zwei gegenüberliegenden Außenseiten des Trägers 6 erstrecken. An ihren entsprechenden Stirnseiten können die Kühlkanäle 16 offen ausgestaltet sein. Dies bietet die Möglichkeit, dass die Kühlkanäle 16 besonders einfach an ein Kühlsystem eines Flugzeugs 4 gekoppelt werden können.

Bei dem Schaum 8 des Trägers 6 der Batteriehaltevorrichtung 2 handelt es sich vorzugsweise um einen geschlossenporigen Polyurethanschaum. Der Schaum 8 kann dabei durch ein Druckverfahren, insbesondere in 3D-Druckverfahren, hergestellt sein. Dies bietet die Möglichkeit, dass der endlosfaserverstärkte Kunststoff 10 des Trägers 6 in den Schaum 8 eingebettet ist. Denn auch der endlosfaserverstärkte Kunststoff 10 des Trägers 6 kann durch ein Druckverfahren, insbesondere ein 3D-Druckverfahren, hergestellt sein. So ist es beispielsweise möglich, dass der Schaum 8 sowie der endlosfaserverstärkte Kunststoff 10 des Trägers 6 in einen ununterbrochenen Verfahren, insbesondere einem additiven Verfahren, hergestellt sind. Dies bietet den Vorteil, dass eine besonders robuste stoffschlüssige Verbindung zwischen dem Schaum 8 und dem endlosfaserverstärktem Kunststoff 10 hergestellt sein kann. Außerdem bietet das zuvor erläuterte Verfahren die Möglichkeit, dass die Hohlräume 12 nicht nachträglich, sondern direkt bei dem Druck des Schaums 8 gebildet werden. Dadurch verringert sich der Aufwand zur Herstellung des Trägers 8. Denn eine nachträgliche Entfernung von Schaumstoffmaterial zur Herstellung der Hohlräume 12 entfällt.

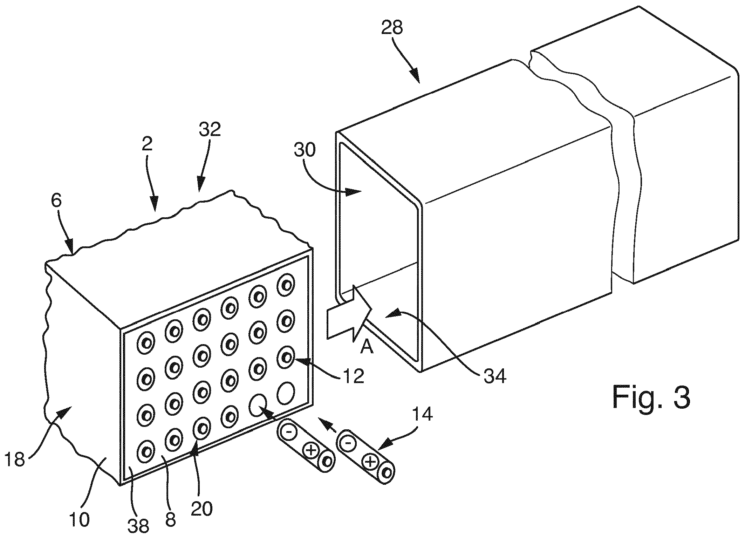

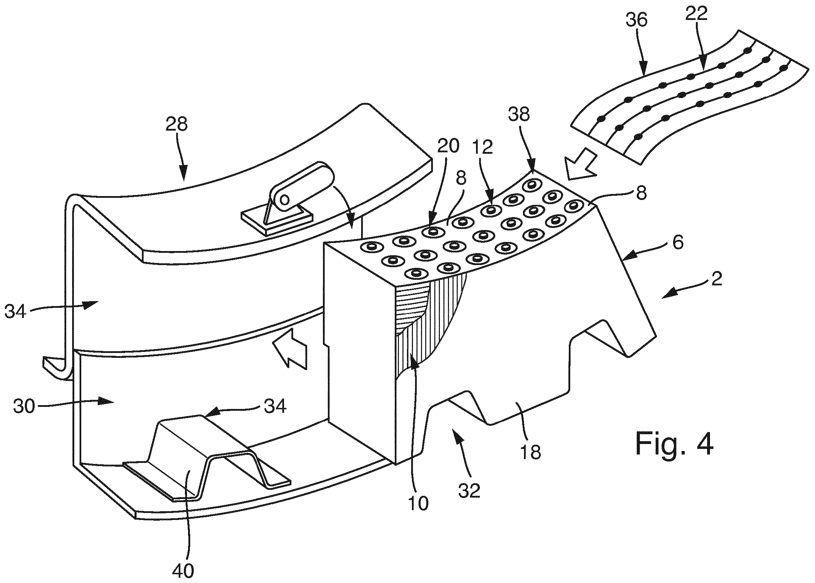

Das zuvor erläuterte Druckverfahren bietet darüber hinaus den Vorteil, dass die äußere Gestaltung und/oder Form des Trägers 6 bzw. der Batteriehaltevorrichtung 2 an den jeweiligen, individuellen Einsatzzweck anpassbar ist. In den Figuren 3 und 4 sind weitere Beispiele der Batteriehaltevorrichtung 2 gezeigt. Aus jedem der beiden genannten Figuren ist ersichtlich, dass der Träger 6 eine andere äußere Form 32 aufweisen kann, die an eine Innenform 34 eines Arbeitsraums 30 eines Strukturbauteils 28 des Flugzeugs 4 angepasst ist. Diese Anpassung erfolgt vorzugsweise derart, dass eine formschlüssige Verbindung zwischen der Batteriehaltevorrichtung 2 und dem Strukturbauteil 28 gewährleistet ist.

Um zu verhindern, dass für das Strukturbauteil 28 des Flugzeugs 4 beim Einsetzen einer Batteriehaltevorrichtung 2 in den Arbeitsraum 30 eine Materialverstärkung des Strukturbauteils 28 notwendig wird, um die Batteriehaltevorrichtung 2 zu tragen, ist es für die Batteriehaltevorrichtung 2 bevorzugt vorgesehen, dass diese einen besonders formstabilen und/oder steifen Träger 6 aufweist. Die Formstabilität des Trägers 6 kann dabei durch die in die Hohlräume 12 einsetzbaren Batterien 14 unterstützt sein. Werden also Batterien 14 in die Hohlräume 12 eingesetzt, kann dadurch eine Batterietragevorrichtung 2 entstehen, die eine besonders hohe Biegesteifigkeit und/oder Verwindungssteifigkeit aufweist. Mit anderen Worten kann es bevorzugt vorgesehen sein, dass diese Batteriehaltevorrichtung 2 selbsttragend ausgebildet ist. Wird diese Batteriehaltevorrichtung 2 nun in den Arbeitsraum 30 des Strukturbauteils 28 eingesetzt, führt dies zumindest im Wesentlichen zu keinem Durchbiegen des Strukturbauteils 28.

Um die Formstabilität der Batteriehaltevorrichtung 2 weiter zu erhöhen, hat es sich als vorteilhaft herausgestellt, wenn der Träger 6 durch Wände 24 in mehrere Sektionen 26 unterteilt ist. Jede Wand 24 ist dabei vorzugsweise ebenfalls aus endlosfaserverstärktem Kunststoff 10 ausgebildet. Hierbei kann es sich um den gleichen, endlosfaserverstärkten Kunststoff 10 handeln, wie es für den Träger 6 zuvor erläutert worden ist. Deshalb ist es besonders bevorzugt vorgesehen, dass die Wände 24 und der endlosfaserverstärkte Kunststoff 10 des Trägers 6 integral ausgebildet sind. Die Wände 24 und der Träger 6 können deshalb in einem ununterbrochenen Verfahren ausgebildet sein, insbesondere durch ein Druckverfahren hergestellt sein. Die Wände 24 erstrecken sich vorzugsweise in der gleichen Richtung. Die Wände 24 können parallel und beabstandet zueinander innerhalb des Trägers 6 angeordnet sein. An jede Wand 24 grenzt deshalb eine Sektion 26. Zwischen den Wänden 24 kann zumindest ein Teil des Schaums 8 angeordnet sein. Von dem Schaum 8 werden die Hohlräume 12 gebildet. Wie es schematisch aus der Figur 1 beispielhaft zu entnehmen ist, können für jede Sektion 26 von dem Schaum 8 eine Mehrzahl von Hohlräumen 12 gebildet sein.

Außerdem ist es bevorzugt vorgesehen, dass an jeder Wand 24 mindestens ein Abschnitt des Kühlkanals 16 oder einer der Kühlkanäle 16 angeordnet ist. Dabei kann der Kühlkanal 16 zumindest teilweise durch die Wand 24 begrenzt sein. Der Kühlkanal 16 kann außerdem von weiterem faserverstärkten Kunststoff mantelseitig begrenzt sein. Wie es aus der Figur 1 beispielhaft zu entnehmen ist, sind vorzugsweise eine Vielzahl von Kühlkanälen 16 vorgesehen. Die Kühlkanäle 16 können parallel zueinander angeordnet sein.

Um zu verhindern, dass die in die Hohlräume 12 eingesetzten Batterien 14 bereits durch den Schaum 8 elektrisch gebunden sind, ist es bevorzugt vorgesehen, dass der Schaum 8 elektrisch isolierend ausgebildet ist. Außerdem ist es bevorzugt vorgesehen, dass der endlosfaserverstärkte Kunststoff 10 des Trägers 6 sowie die Wände 24 derart beabstandet zu den stirnseitigen Öffnungen der Hohlräume 12 angeordnet ist, sodass durch den endlosfaserverstärkte Kunststoff 10 bzw. die Wände 24 keine elektrische Kopplung zwischen den in den Hohlräumen 12 eingesetzten Batterien 14 hergestellt ist. Vielmehr ist es bevorzugt vorgesehen, dass die Batteriehaltevorrichtung 2 elektrische Verbindungsleitungen 22 aufweist, die angeordnet sind, um die in die Hohlräume 12 einsetzbaren Batterien nach einem vorbestimmten Schaltplan elektrisch miteinander zu verbinden. Die elektrischen Verbindungsleitungen 22 können innerhalb des Trägers 2 angeordnet und/oder eingebettet sein oder zumindest teilweise in den Träger 6 integriert sein. So können sich beispielsweise elektrische Verbindungsleitungen 22 innerhalb des Schaums 8 eingebettet erstrecken. Dies ist jedoch nicht in den Figuren dargestellt. Vielmehr ist in der Figur 1 eine beispielhafte Ausgestaltung dargestellt, bei der die elektrischen Verbindungsleitungen 22 auf einer Folie 36 angeordnet sind. Die Verbindungsleitungen 22 können auf der Folie 36 derart angeordnet sein, dass mittels der Verbindungsleitungen 22 eine gewünschte Verschaltung zwischen einer Mehrzahl von Batterien 14 gewährleistet werden kann.

Aus der Figur 1 ist beispielhaft und schematisch zu erkennen, dass die Hohlräume 12 parallel derart zueinander angeordnet sind, dass an einer Außenseite 38 zu jedem Hohlraum 12 ein Zugang 20 ausgebildet ist, sodass in jeden Hohlraum 12 eine oder mehrere Batterien 14 durch den zugehörigen Zugang 20 einsetzbar sind. Derartige Zugänge 20 können an gegenüberliegenden Außenseiten 38 des Trägers 6 von dem Schaum 8 ausgebildet sein. Dabei kann die Länge der Hohlräume 12 in Axialrichtung derart ausgestaltet sein, dass die gegenüberliegenden Pole einer Batterie 14 oder die gegenüberliegenden Pole einer Reihe von Batterien 14 an den gegenüberliegenden Zugängen 20 angeordnet sind. Dies bietet den Vorteil, dass die Pole der Batterien 14 mittels der Verbindungsleitungen 22 auf einer Folie 36 in einer vorbestimmten Weise miteinander elektrisch verbunden werden können. Denn sobald die Batterien 14 in die Hohlräume 12 eingesetzt sind, können die Folien 36 auf die zuvor genannten, gegenüberliegenden Außenseiten 38 angeordnet werden, was die gewünschte elektrische Kopplung der Batterien 14 gewährleistet. Die Folien 36 können lösbar mit dem Träger 6 verbunden sein. Dies bietet den Vorteil, dass die Folien 36 sodann der Batteriehaltevorrichtung 2 zugeordnet sein können. Die Batteriehaltevorrichtung 2 kann als Einheit handhabbar sein.

Die zuvor genannte Batteriehaltevorrichtung 2 kann nämlich sodann beispielsweise in Axialrichtung A in einen von einem Strukturbauteil 28 gebildeten Hohlraum 30 eingeschoben werden. Der Hohlraum 30 des Strukturbauteils 28 kann dabei einen Arbeitsraum 30 bilden, der von dem Strukturbauteil 28 geschützt und/oder aufgespannt wird. Wie zuvor erläutert, ist es bevorzugt vorgesehen, dass die Außenform 32 der Batteriehaltevorrichtung 2 zu der Innenform 34 des Strukturbauteils 28 korrespondiert, sodass eine formschlüssige Verbindung zwischen der Batteriehaltevorrichtung 2 und dem Strukturbauteil 28 gewährleistet werden kann.

Es ist deshalb ebenfalls vorgesehen, dass ein Flugzeug 4 mit einem Strukturbauteil 28 und einer Batteriehaltevorrichtung 2 vorgesehen ist, wobei Batterien 14 in die Hohlräume 12 des Trägers 6 der Batteriehaltevorrichtung 2 eingesetzt sind, und wobei die Batteriehaltevorrichtung 2 lösbar in den Arbeitsraum 30 des Strukturbauteils 28 eingesetzt ist.

In der Figur 4 ist eine weitere vorteilhafte Ausgestaltung einer Zusammenschau zwischen dem Strukturbauteil 28 des Flugzeugs 4 und der Batteriehaltevorrichtung 2 gezeigt. Das Strukturbauteil 28 hat zumindest im Wesentlichen einen U-förmigen Querschnitt. Auf dem unteren Schenkel des Strukturbauteils 28 ist jedoch ein Verstärkungsprofil 40 angeordnet. Um zu gewährleisten, dass die Batteriehaltevorrichtung 2 formschlüssig in den Arbeitsraum 30 des Strukturbauteils 28 des Flugzeugs 4 einsetzbar ist, ist es bevorzugt vorgesehen, dass die äußere Form 32 der Batteriehaltevorrichtung 2 zumindest im Wesentlichen der Innenform 32 des Arbeitsraum 30 des Strukturbauteils 28 entspricht.

In der Praxis wurde festgestellt, dass es zu einer Reibung zwischen einer Außenseite 18 und dem Strukturbauteil 28 kommen kann. Es ist deshalb bevorzugt vorgesehen, dass zumindest ein Teil des faserverstärkten Kunststoffes 10 des Trägers 6 an mindestens einer Außenseite 18 des Trägers 6 angeordnet ist. Dieser Teil des faserverstärkten Kunststoffs 10 kann somit dazu beitragen, dass die Batteriehaltevorrichtung 2 besonders robust und langlebig ist.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. **Batteriehaltevorrichtung (2)** für ein Flugzeug (4), aufweisend: einen Träger (6), der aus festem Schaum (8) und mit dem Schaum (8) verbundenen, endlosfaserverstärktem Kunststoff (10) gebildet ist, eine Mehrzahl von Hohlräumen (12), in die Batterien (14) einsetzbar sind, und mindestens einen Kühlkanal (16) zur Kühlung von in den Hohlräumen (12) einsetzbaren Batterien (14), wobei die Hohlräume (12) nur von dem festen Schaum (8) des Trägers (6) gebildet sind

2. Batteriehaltevorrichtung (2) nach Anspruch 1 , **dadurch gekennzeichnet, dass** zumindest ein Teil des endlosfaserverstärkten Kunststoffes (10) des Trägers (6) an mindestens einer Außenseite (38) des Trägers (6) angeordnet ist.

3. Batteriehaltevorrichtung (2) nach Anspruch 1 oder 2, **dadurch gekennzeichnet, dass** der Schaum (8) als druckbarer Schaum ausgebildet ist.

4. Batteriehaltevorrichtung (2) nach einem der vorhergehenden Ansprüche, **dadurch gekennzeichnet, dass** der Schaum (8) elektrisch isolierend ausgebildet ist.

5. Batteriehaltevorrichtung (2) nach einem der vorhergehenden Ansprüche, **dadurch gekennzeichnet, dass** die Hohlräume (12) innerhalb des Trägers (6) angeordnet sind, wobei zu jedem Hohlraum (12) ein Zugang (20) an der Außenseite (18, 38) oder an gegenüberliegenden Außenseiten (38) des Trägers (6) ausgebildet ist, so dass in jeden Hohlraum (12) eine Batterie (14) durch den zugehörigen Zugang (20) einsetzbar ist.

6. Batteriehaltevorrichtung (2) nach einem der vorhergehenden Ansprüche, **dadurch gekennzeichnet, dass** jeder Hohlraum (12) zur Aufnahme von mehreren Batterien (14) ausgebildet ist.

7. Batteriehaltevorrichtung (2) nach einem der vorhergehenden Ansprüche, **gekennzeichnet durch** elektrische Verbindungsleitungen (22), die angeordnet sind, um die einsetzbaren Batterien (14) in einer vorbestimmten Struktur elektrisch zu verbinden, wobei die Verbindungsleitungen (22) innerhalb des Trägers (6) angeordnet sind und/oder in den Träger (6) zumindest teilweise integriert sind.

8. Batteriehaltevorrichtung (2) nach einem der vorhergehenden Ansprüche, **dadurch gekennzeichnet, dass** der Träger (6) durch Wände (24) in mehrere Sektionen (26) unterteilt ist, wobei jede Wand (24) aus endlosfaserverstärktem Kunststoff gebildet ist, und wobei die Wände (24) und der endlosfaserverstärkte Kunststoff (10) des Trägers (6) integral ausgebildet sind.

9. Batteriehaltevorrichtung (2), nach dem vorhergehenden Anspruch **dadurch gekennzeichnet, dass** an jeder Wand (24) mindestens ein Abschnitt des Kühlkanals (16) oder einer der Kühlkanäle (16) ausgebildet ist.

10. Batteriehaltevorrichtung (2) nach einem der vorhergehenden Ansprüche 8 oder 9, **dadurch gekennzeichnet, dass** die Wände (24) und der Träger (6) in einem ununterbrochenen Verfahren gedruckt ausgebildet sind.

11. **Flugzeug (4),** aufweisend: ein Strukturbauteil (28), und einen Batteriehaltevorrichtung (2) nach einem der vorhergehenden Ansprüche, wobei mindestens eine Batterie (14) in jeden Hohlraum (12) des Trägers (6) der Batteriehaltevorrichtung (2) eingesetzt ist, und wobei die Batteriehaltevorrichtung (2) lösbar in einem von dem Strukturbauteil (28) geschützten und/oder aufgespannten Arbeitsraum (30) angeordnet und/oder befestigt ist.

12. Flugzeug (4) nach dem vorhergehenden Anspruch, **dadurch gekennzeichnet, dass** das Strukturbauteil (28) hohlzylindrisch ausgebildet ist.

13. Flugzeug (4) nach dem vorhergehenden Anspruch, **dadurch gekennzeichnet, dass** der Träger (6) der Batteriehaltevorrichtung (2) eine mantelseitige Außenform aufweist, die zu einer Innenform (34) des hohlzylindrischen Strukturbauteils (28) des Flugzeugs (4) korrespondiert.

## Claims

1. A battery holding device (2) for an aircraft (4), comprising: a carrier (6) formed of solid foam (8) and continuous-fibre-reinforced plastic (10) bonded to the foam (8), a plurality of cavities (12) into which batteries (14) are insertable, and at least one cooling channel (16) for cooling batteries (14) insertable into the cavities (12), wherein the cavities (12) are formed only by the solid foam (8) of the carrier (6).

2. Battery holding device (2) according to claim 1, **characterised in that** at least part of the continuous fibre-reinforced plastic (10) of the carrier (6) is arranged on at least one outer side (38) of the carrier (6).

3. Battery holding device (2) according to claim 1 or 2, **characterised in that** the foam (8) is formed as a printable foam.

4. Battery holding device (2) according to one of the preceding claims, **characterised in that** the foam (8) is electrically insulating.

5. Battery holding device (2) according to one of the preceding claims, **characterised in that** the cavities (12) are arranged within the carrier (6), wherein an access (20) to each cavity (12) is formed on the outer side (18, 38) or on opposite outer sides (38) of the carrier (6), so that a battery (14) can be inserted into each cavity (12) through the associated access (20).

6. Battery holding device (2) according to any one of the preceding claims, **characterised in that** each cavity (12) is configured to receive a plurality of batteries (14).

7. Battery holding device (2) according to any one of the preceding claims, **characterized by** electrical connection lines (22) arranged to electrically connect the insertable batteries (14) in a predetermined structure, said connection lines (22) being arranged within and/or at least partially integrated into the carrier (6).

8. Battery holding device (2) according to any one of the preceding claims, **characterised in that** the carrier (6) is divided into a plurality of sections (26) by walls (24), each wall (24) being formed of continuous fibre-reinforced plastic, and wherein the walls (24) and the continuous fibre-reinforced plastic (10) of the carrier (6) are integrally formed.

9. Battery holding device (2) according to the preceding claim **characterised in that** at least a portion of the cooling channel (16) or one of the cooling channels (16) is formed on each wall (24).

10. Battery holding device (2) according to any one of the preceding claims 8 or 9, **characterised in that** the walls (24) and the support (6) are formed in a continuous printed process.

11. An aircraft (4) comprising: a structural member (28), and a battery holding device (2) according to any one of the preceding claims, wherein at least one battery (14) is inserted into each cavity (12) of the support (6) of the battery retainer (2), and wherein the battery retainer (2) is detachably disposed and/or secured in a working space (30) protected and/or spanned by the structural member (28).

12. Aircraft (4) according to the preceding claim, **characterised in that** the structural member (28) is hollow cylindrical.

13. Aircraft (4) according to the preceding claim, **characterised in that** the support (6) of the battery retaining device (2) has a shell-side outer shape corresponding to an inner shape (34) of the hollow cylindrical structural component (28) of the aircraft (4).

## Revendications

1. Dispositif de maintien de batterie (2) pour un avion (4), comprenant : un support (6) formé de mousse solide (8) et de plastique renforcé par des fibres continues (10) lié à la mousse (8), une pluralité de cavités (12) dans lesquelles des batteries (14) peuvent être insérées, et au moins un canal de refroidissement (16) pour refroidir les batteries (14) pouvant être insérées dans les cavités (12), dans lequel les cavités (12) sont formées uniquement par la mousse solide (8) du support (6).

2. Dispositif de maintien de batterie (2) selon la revendication 1, **caractérisé en ce qu'**au moins une partie de la matière plastique renforcée par des fibres continues (10) du support (6) est disposée sur au moins un côté extérieur (38) du support (6).

3. Dispositif de maintien de batterie (2) selon la revendication 1 ou 2, **caractérisé en ce que** la mousse (8) est formée comme une mousse imprimable.

4. Dispositif de maintien de batterie (2) selon l'une des revendications précédentes, **caractérisé en ce que** la mousse (8) est électriquement isolante.

5. Dispositif de maintien de batterie (2) selon l'une des revendications précédentes, **caractérisé en ce que** les cavités (12) sont disposées à l'intérieur du support (6), dans lequel un accès (20) à chaque cavité (12) est formé sur le côté extérieur (18, 38) ou sur des côtés extérieurs opposés (38) du support (6), de sorte qu'une batterie (14) peut être insérée dans chaque cavité (12) à travers l'accès associé (20).

6. Dispositif de maintien de batteries (2) selon l'une quelconque des revendications précédentes, **caractérisé en ce que** chaque cavité (12) est configurée pour recevoir une pluralité de batteries (14).

7. Dispositif de maintien de batterie (2) selon l'une quelconque des revendications précédentes, **caractérisé par** des lignes de connexion électrique (22) disposées pour connecter électriquement les batteries insérables (14) dans une structure prédéterminée, lesdites lignes de connexion (22) étant disposées à l'intérieur et/ou au moins partiellement intégrées dans le support (6).

8. Dispositif de maintien de batterie (2) selon l'une quelconque des revendications précédentes, **caractérisé en ce que** le support (6) est divisé en une pluralité de sections (26) par des parois (24), chaque paroi (24) étant formée de plastique continu renforcé par des fibres, et dans lequel les parois (24) et le plastique continu renforcé par des fibres (10) du support (6) sont intégralement formés.

9. Dispositif de maintien de batterie (2) selon la revendication précédente **caractérisé en ce qu'**au moins une partie du canal de refroidissement (16) ou de l'un des canaux de refroidissement (16) est formée sur chaque paroi (24).

10. Dispositif de maintien de batterie (2) selon l'une quelconque des revendications précédentes 8 ou 9, **caractérisé en ce que** les parois (24) et le support (6) sont formés selon un procédé d'impression en continu.

11. Aéronef (4) comprenant : un élément de structure (28), et un dispositif de maintien de batterie (2) selon l'une quelconque des revendications précédentes, dans lequel au moins une batterie (14) est insérée dans chaque cavité (12) du support (6) du dispositif de maintien de batterie (2), et dans lequel le dispositif de maintien de batterie (2) est disposé et/ou fixé de manière amovible dans un espace de travail (30) protégé et/ou couvert par l'élément de structure (28).

12. Aéronef (4) selon la revendication précédente, **caractérisé en ce que** l'élément de structure (28) est cylindrique creux.

13. Aéronef (4) selon la revendication précédente, **caractérisé en ce que** le support (6) du dispositif de retenue de batterie (2) présente une forme extérieure côté coque correspondant à une forme intérieure (34) de l'élément structurel cylindrique creux (28) de l'aéronef (4).
